# EUROPÄISCHE PATENTSCHRIFT

(11) **EP 1 745 689 B1**
(45) Veröffentlichungstag und Bekanntmachung des Hinweises auf die Patenterteilung: **26.06.2013**
(21) Anmeldenummer: 06100557.5
(22) Anmeldetag: 19.01.2006
(51) Int. Cl.: A01D 34/82, F16F 1/387, B25F 5/00

(54) **Gerät vorzugsweise zur Rasen-, Garten- bzw. Grundstückspflege, Dämpfungseinrichtung und Dämpfungselement**
Apparatus preferably for lawn, garden respectively yard care, damping device and damping element
Appareil de préférence pour l'entretien du gazon, jardin respectivement champ, dispositif amortisseur et élément d'amortissement

(30) Priorität: 19.07.2005 DE 102005033596
(43) Veröffentlichungstag der Anmeldung: 24.01.2007
(73) Patentinhaber: SABO-Maschinenfabrik GmbH, 51645 Gummersbach (DE)
(72) Erfinder: Hartmann, Dietmar, 51674, Wiehl (DE); Joseph, Franz, 51766, Engelskirchen (DE); Nowack, Wolfgang, 51674, Wiehl (DE)
(74) Vertreter: John Deere GmbH & Co. KG

(56) Entgegenhaltungen:
- EP-A2- 0 081 079
- EP-A2- 0 128 128
- DE-A1- 10 261 756
- DE-A1- 19 502 171
- DE-U1- 9 216 981
- GB-A- 494 811

## Beschreibung

Die Erfindung betrifft ein Gerät zur Rasen-, Garten- bzw. Grundstückspflege mit einem Gehäuse, einem an dem Gehäuse über eine Dämpfungseinrichtung, welche wenigstens ein zumindest teilweise elastisch ausgebildetes Dämpfungselement aufweist, und einen Führungsholm angebrachten Handgriff sowie einem Antrieb.

Handgeführte bzw. handgeschobene Rasenmäher weisen oftmals einen Führungsholm auf, der an dem Rasenmäher bzw. einem Gehäuse in einem rückwärtigen Bereich angeordnet ist. Solche Führungsholme können beweglich vorgesehen sein, so dass sie bei Nichtgebrauch oder zum Transport in eine Stellung gebracht werden können, in der die Rasenmäher einen geringeren Platzbedarf aufweisen.

Die DE-A1-35 03 938 zeigt eine elastische Griffholme-Lagerung für beidhändig geführte Motorgeräte, welche eine elastische Griffholme-Lagerung aufweist, die durch zwei Achsen, die senkrecht zueinander stehen, mit Hilfe von vier Gummilagern realisiert wird.

Die DE-A1-195 02 171 zeigt ein Freischneidegerät mit einer einen Verbrennungsmotor enthaltenden Antriebseinheit für ein Arbeitswerkzeug. Über Schwingungsdämpfer ist mit der Antriebseinheit eine Griffeinheit verbunden.

Das der Erfindung zugrunde liegende Problem wird darin gesehen, dass bekannte handgeführte Motorgeräte zur Dämpfung von Schwingungen eine große Anzahl von Bauteilen aufweisen.

Dieses Problem wird erfindungsgemäß durch die Lehre des Patent-anspruchs 1 gelöst, wobei in den weiteren Patentansprüchen Merkmale aufgeführt sind, die die Lösung in vorteilhafter Weise weiterentwickeln.

Auf diese Weise wird ein Gerät mit einem Gehäuse, einem an dem Gehäuse über eine Dämpfungseinrichtung, welche wenigstens ein zumindest teilweise elastisch ausgebildetes Dämpfungselement aufweist, und einen Führungsholm angebrachten Handgriff sowie einem Antrieb, zur Verfügung gestellt, welches an eine Bedienungsperson, welche an dem Handgriff angreift, nur geringe bzw. reduzierte Vibrationen weitergibt. Dies erhöht den Komfort für die Bedienungsperson und kann dazu beitragen, insbesondere gesetzliche Auflagen mit Hinblick auf eine zulässige Vibrationsbelastungen einer Bedienungsperson zu erfüllen. Da die Steifigkeit des Dämpfungselements durch seinen wenigstens einen Hohlraum und/oder wenigstens eine Aussparung umfassenden Querschnitt bestimmt wird, kann diese sehr flexibel gestaltet werden, ohne dass hierzu eine Vielzahl von Bauteilen benötigt wird. Um die Steifigkeit zu verändern bzw. anzupassen, ist ein Dämpfungselement abweichenden bzw. angepassten Querschnitts zu wählen. Der Querschnitt weist wenigstens einen Hohlraum und/oder wenigstens eine Aussparung auf, dessen/deren Größe, Erstreckung und/oder Form die Steifigkeit des Dämpfungselements neben dem Material des übrigen Körpers des Dämpfungselements bestimmen bzw. beeinflussen. Darüber hinaus könnte vorgesehen sein, dass der Hohlraum einen Unterdruck bzw. ein Vakuum aufweist und/oder mit einem Gas, unterschiedlichen Gasen oder auch unter Druck stehenden Gasen befüllt ist. Es ist denkbar, dass die Dämpfungseinrichtung den Führungsholm direkt mit dem Gerät oder einem Gehäuse des Geräts verbindet. Gemäß der vorliegenden Erfindung weist der Führungsholm aber wenigstens einen ersten Holmteil und einen zweiten Holmteil auf, wobei die Dämpfungseinrichtung die beiden Holmteile direkt oder indirekt verbindet. Eine solche Anordnung ist einfach in der Herstellung und Wartung und kann ebenso als Auswahl vorgesehen sein oder an einem derartigen Gerät nachgerüstet werden.

Ist das Dämpfungselement im Wesentlichen einteilig und/oder umfangsmäßig zumindest im Wesentlichen geschlossen ausgebildet, so kann es in besonders einfacher Art und Weise montiert und hergestellt werden. Ein geschlossener Umfang hat darüber hinaus den Vorteil, dass das Dämpfungselement sich nicht mit anderen Bauteilen verhaken oder verschmutzen oder auch einfach in einen anderen Bauteil eingebracht werden kann.

Weist die Dämpfungseinrichtung mehrere, vorzugsweise zwei Dämpfungselemente auf, so kann dies die Montage erleichtern. Darüber hinaus können die Dämpfungselemente das Dämpfungsverhalten weiter günstig beeinflussen, da sie in unterschiedlichen Bereichen angeordnet sein können und/oder gleiche oder unterschiedliche Dämpfungseigenschaften bzw. Steifigkeiten aufweisen.

Um die Steifigkeit weiter zu beeinflussen oder zu verändern kann das Dämpfungselement mehrere Hohlräume und/oder Aussparungen aufweisen, von denen vorzugsweise wenigstens einer von den Übrigen abweichend dimensioniert und/oder geformt ist.

Die Hohlräume können unterschiedlich geformt oder von unterschiedlicher Größe sein. Eine besonders gleichmäßige Steifigkeit über den Querschnitt ergibt sich aber, wenn wenigstens zwei der Hohlräume/der Aussparungen gleich dimensioniert und/oder geformt sind.

Hierzu kann es weiter beitragen, wenn Hohlräume/Aussparungen gleicher Form und/oder Dimension alternierend angeordnet und/oder gruppiert sind.

Die Hohlräume/Aussparungen können umfangsmäßig und/oder radial beabstandet sein. Die Aussparungen können in einfacher Art und Weise als umlaufende Rillen bzw. Nuten ausgebildet sein.

Sind zwischen den Hohlräumen/Aussparungen Rippen vorgesehen, so können diese die Hohlräume/Aussparungen voneinander trennen. Es können aber Stege etc. vorgesehen sein. Diese Rippen sind vorzugsweise Bestandteil des Dämpfungselements bzw. bilden dieses zum Teil. Es ist aber auch denkbar, in das Dämpfungselement Verstärkungsrippen oder -streben einzubringen.

Die Rippen können gleich oder abweichend ausgebildet bzw. dimensioniert, insbesondere gleich oder unterschiedlich breit sein.

Die Dämpfungseinrichtung kann ein Dämpfungseinrichtungsgehäuse aufweisen, das daran angepasst ist, das Dämpfungselement aufzunehmen. Ein solches Dämpfungseinrichtungsgehäuse ist insbesondere günstig, um das Dämpfungselement auswechselbar aufnehmen zu können oder auch um die Dämpfungseinrichtung an dem Gerät oder an einem Bauteil des Geräts anbringen zu können.

Besonders günstig ist es, wenn das Dämpfungselement und/oder das Dämpfungseinrichtungsgehäuse an wenigstens einem der Holmteile angreift bzw. mit einem der Holmteile zusammenwirkt. Hierzu kann das Dämpfungseinrichtungsgehäuse und/oder das Dämpfungselement beispielsweise mit dem einen Holmteil fest oder lösbar verbunden, beispielsweise verschraubt, verschweißt, geklemmt etc. sein.

Weist das Dämpfungselement eine zumindest im Wesentlichen zylindrische Kontur auf, so ist dies einfach in der Herstellung und es wird ein geringer Bauraum benötigt. Darüber hinaus kann ein derart ausgebildetes Dämpfungselement besonders leicht in ein Dämpfungseinrichtungsgehäuse, insbesondere in ein manschettenartig ausgebildetes Dämpfungseinrichtungsgehäuse eingebracht bzw. im Bedarfsfall entfernt werden.

Um das Dämpfungselement in einfacher Weise an dem Holmteil beispielsweise durch ein Verklemmen, Aufpressen oder Aufschrumpfen verbinden zu können, kann der Querschnitt wenigstens eine Aussparung zur Aufnahme wenigstens eines der Holmteile aufweisen.

Das Dämpfungselement kann ganz oder zumindest im Wesentlichen oder wenigstens bereichsweise aus einem Kunststoff- oder Gummimaterial bestehen. Darüber hinaus können, beispielsweise zur Verstärkung, Einsätze, Rippen etc. oder auch eine innen- oder außenliegende Hülse o. ä. aus anderen, auch unelastischen Materialien vorgesehen sein.

Der Querschnitt kann insbesondere bezogen auf die Längsachse des Dämpfungselements bzw. auf wenigstens einen Führungsholmteil symmetrisch ausgebildet sein. Eine derartige Ausbildung ist besonders einfach in der Herstellung und weist einheitliche Eigenschaften auf. Um auftretenden Anforderungen gerecht zu werden, kann der Querschnitt entlang der Längsachse bzw. entlang des Führungholmteils einheitlich oder abweichend ausgebildet sein. Beispielsweise kann/können sich der Hohlraum/die Hohlräume durch das ganze Längselement erstrecken, sie können auch abschnittsweise regelmäßig oder unregelmäßig oder in jeder anderen geeigneten Art und Weise verteilt sein.

Das Gerät kann darüber hinaus eine Überlastsicherung aufweisen, welche das Dämpfungselement vor Beschädigungen schützt.
Das Dämpfungselement kann beispielsweise in dem Dämpfungseinrichtungsgehäuse derart gesichert werden, dass bei einem Auftreten von den normalen Betriebsbedingungen abweichende Anforderungen, beispielsweise wenn das Gerät an dem Führungsholm angehoben wird und dementsprechend erhöhte Kräfte auf die Dämpfungseinrichtung einwirken, eine zusätzliche Sicherung durch die Überlastsicherung erfolgt. Im normalen Betrieb kann das Dämpfungselement in dem Dämpfungseinrichtungsgehäuse beispielsweise durch eine reibschlüssige Verbindung gehalten werden. Eine Kraftübertragung mittels des Sicherungselements kann dann in dem Fall erfolgen, wenn Kräfte auftreten, die die Reibkräfte der reibschlüssigen Verbindung übersteigen. Hierzu kann das Sicherungselement in dem Dämpfungseinrichtungsgehäuse beispielsweise in einer Spielpassung aufgenommen werden. Eine derartige Überlastsicherung kann auch in Verbindung mit abweichend von den in der vorliegenden Patentanmeldung beschriebenen Dämpfungseinrichtungen bzw. Dämpfungselementen Verwendung finden.

Bei dem Gerät kann es sich um ein selbstfahrendes oder handgeführtes Gerät, beispielsweise einen Vertikutierer, eine Kehrmaschine, eine Motorharke oder jedes andere, einen Motor aufweisende bzw. motorisch angetriebene Gerät, vorzugsweise in der Art eines Geräts zur Rasen-, Garten- bzw. Grundstückspflege, insbesondere aber um einen Rasenmäher handeln.

Eine derartige Dämpfungseinrichtung kann an einem geeigneten Gerät, insbesondere einem Gerät zur Rasen-, Garten- und Grundstückspflege, insbesondere aber auch an Rasenmähern nachgerüstet werden, um eine Übertragung von Schwingungen zu reduzieren.

Durch ein Ersetzen oder Austauschen des Dämpfungselements gegen ein Dämpfungselement anderer Steifigkeit kann unterschiedlichen Anforderungen an das Gerät bzw. an die Dämpfungseinrichtung gerecht geworden werden. Ein solches Dämpfungselement kann auch als Ersatzteil eingesetzt werden.

In der Zeichnung sind zwei nachfolgend näher beschriebene Ausführungsbeispiele der Erfindung dargestellt. Es zeigt:
- Fig. 1: eine Seitenansicht eines Geräts mit einem Führungsholm mit einer Dämpfungseinrichtung,
- Fig. 2: eine Schnittdarstellung der an dem Führungsholm vorgesehen Dämpfungseinrichtung aus Figur 1.
- Fig. 3: eine Schnittdarstellung einer alternativen Dämpfungseinrichtung,
- Fig. 4: eine vergrößerte Darstellung eines Dämpfungselements der Dämpfungseinrichtung gemäß Figur 3 und
- Fig. 5: eine Schnittdarstellung einer weiteren alternativen Dämpfungseinrichtung.

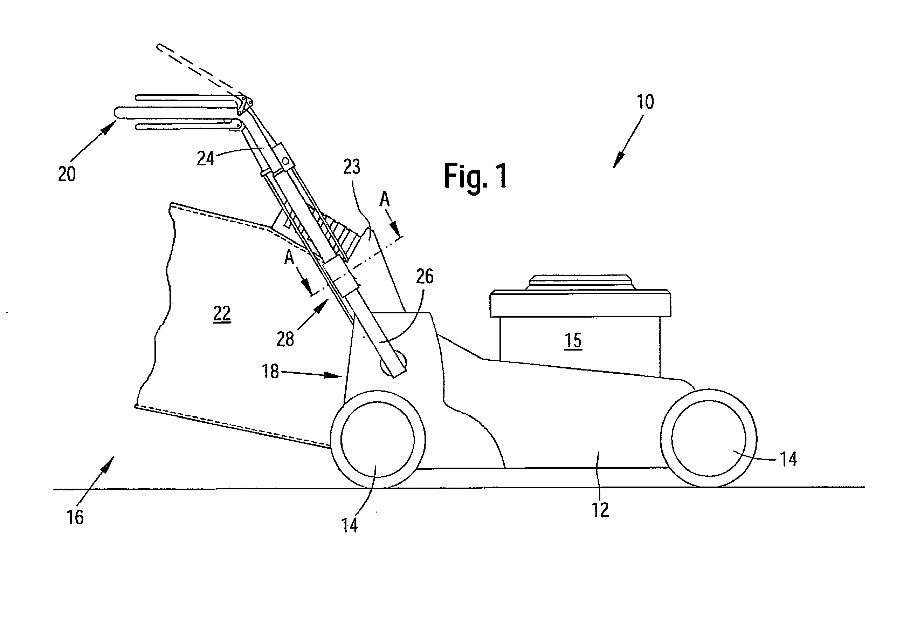

Es wird zuerst auf Figur 1 Bezug genommen, in der ein Mähgerät bzw. ein Gerät 10 in der Art eines handgeführten oder auch handgeschobenen Rasenmähers in einer Betriebsstellung gezeigt wird. Der Rasenmäher weist ein Gehäuse 12 auf, das sich über zwei vordere und zwei rückwärtige Räder 14 auf dem Untergrund abstützt. An dem Gehäuse 12 ist ein nur andeutungsweise dargestellter Antrieb 15, beispielsweise in der Art eines Verbrennungsmotors oder auch eines elektrischen Antriebs vorgesehen, um ein oder mehrere unterhalb des Gehäuses 12 angebrachte(s) Mähmesser oder Arbeitseinheiten, beispielsweise in der Art von Sichelmessern oder auch von Spindelmessern, in Rotation zu versetzen, um Gras bzw. Pflanzenwuchs zu schneiden.

Das Gehäuse 12 weist in einem bezogen auf die übliche Betriebsrichtung des Geräts 10 rückwärtigen Bereich 16 eine nur andeutungsweise dargestellte Auswurföffnung 18 auf, über die abgeschnittene Pflanzenabschnitte das Gehäuse 12 verlassen können.

An dem rückwärtigen Bereich 16 des Gehäuses 12 ist ein Führungsholm 20 sowie eine Abdeckklappe 23 angebracht. An den rückwärtigen Bereich 16 angrenzend ist, wie in Figur 1 darstellt, ein Sammelbehälter 22 lösbar an dem Fahrzeug 10 bzw. dessen Gehäuse 12 vorgesehen, so dass in diesem die durch die Auswurföffnung 18 abgegebenen Pflanzenabschnitte gesammelt werden können, um einer späteren Entsorgung oder auch Kompostierung zugeführt zu werden.

Der Führungsholm 20 weist einen ersten oberen Holmteil 24 und einen zweiten unteren Holmteil 26 auf. Die beiden Holmteile 24, 26 sind mittels einer Dämpfungseinrichtung 28, auf welche im Folgenden detailliert eingegangen werden wird, verbunden.

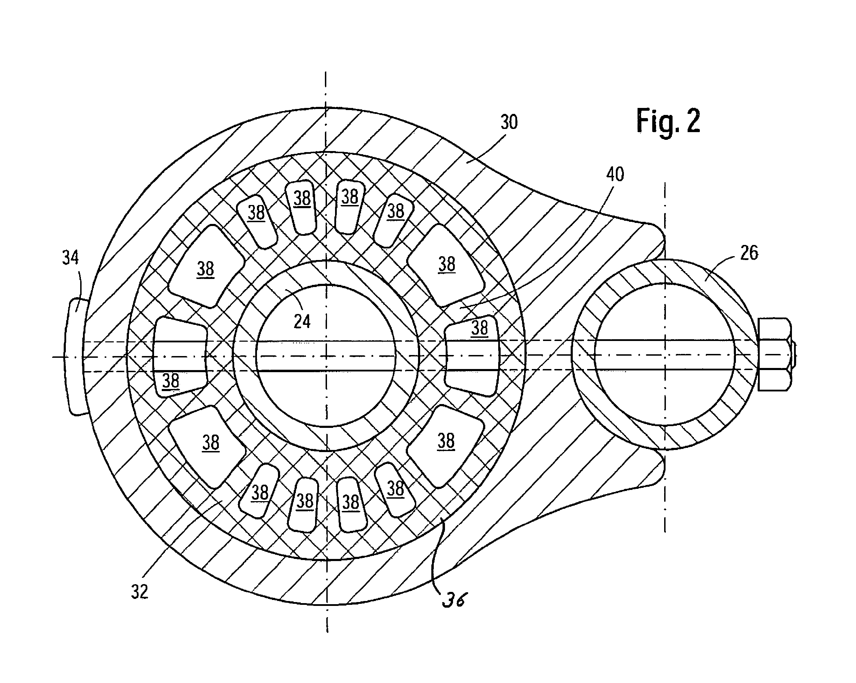

Es wird nun auf Figur 2 Bezug genommen, welche eine Schnittdarstellung durch die Dämpfungseinrichtung 28 und die beiden Holmteile 24, 26 zeigt.

Die Dämpfungseinrichtung 28 weist ein Dämpfungseinrichtungsgehäuse 30 und ein Dämpfungselement 32 auf. Das Dämpfungseinrichtungsgehäuse 30 ist in der Art einer Manschette ausgebildet, welche dazu geeignet ist, das Dämpfungselement 32 aufzunehmen und besteht beispielsweise aus einem Alu- oder Zinkdruckguß.

Das Dämpfungselement 32 ist in einem inneren, ringförmigen Bereich des manschettenartigen Dämpfungseinrichtungsgehäuses 30 angeordnet und wird in dieses beispielsweise eingepresst, durch Aufschrumpfen des Dämpfungseinrichtungsgehäuses 30 eingebracht oder aufvulkanisiert und gehalten. Es ist aber auch eine zusätzliche Sicherung des Dämpfungselements 32 in dem Dämpfungseinrichtungsgehäuse 30 denkbar oder das Dämpfungselement 32 kann in dem Dämpfungseinrichtungsgehäuse mittels eines oder mehrerer beiderseits des Dämpfungseinrichtungsgehäuse 30 angeordneten Anschlag bzw. Anschlägen gehalten werden. Diese Anschläge können mit dem Dämpfungseinrichtungsgehäuse 30 je nach Anwendungsfall fest oder lösbar verbunden sein. Es ist auch denkbar, dass ein Anschlag, bzw. mehrere Anschläge an das Dämpfungseinrichtungsgehäuse 30 angeformt ist/sind. Besonders einfach ist es aber, wenn die beiden Holmteile 24, 26, das Dämpfungselement 32 sowie das Dämpfungseinrichtungsgehäuse 30 durch ein durch eine alle diese Bauteile durchtretende Aussparung gestecktes Sicherungselement 34 gesichert werden. Dieses Sicherungselement 34 ist gemäß dem vorliegenden Ausführungselement in der Art einer das Dämpfungseinrichtungsgehäuse 30 und das Dämpfungselement 32 durchdringenden und mittels einer Mutter gesicherten Schraube ausgebildet. Es ist aber auch denkbar, das Dämpfungselement 32 und den ersten Führungsholmteil 24 in dem Dämpfungseinrichtungsgehäuse 30 mittels eines in der Art eines Bolzens ausgebildeten und entsprechend dem ersten Ausführungsbeispiel angeordneten Sicherungselements zu sichern. Ein derartiger Bolzen kann beispielsweise in das Dämpfungselement 32 reibschlüssig eingebracht werden oder mittels Stiften oder in anderer geeigneter Weise gesichert werden. Das Dämpfungseinrichtungsgehäuse 30 kann mit dem zweiten Führungsholmteil 26 dann verschraubt oder verschweißt oder in anderer geeigneter Weise fest verbunden sein.

Das Sicherungselement 34 kann auch in der Art einer Überlastsicherung wirken, welche das Dämpfungselement 32 in dem Dämpfungseinrichtungsgehäuse 30 beispielsweise nur dann sichert, wenn von den normalen Betriebsbedingungen abweichende Anforderungen auf die Dämpfungseinrichtung 38 einwirken. Dies kann beispielsweise der Fall sein, wenn das Gerät 10 an dem Führungsholm 20 angehoben wird und dementsprechend erhöhte Kräfte auf die Dämpfungseinrichtung 28 einwirken. Im normalen Betrieb kann das Dämpfungselement 32 in dem Dämpfungseinrichtungsgehäuse 30 beispielsweise durch eine reibschlüssige Verbindung gehalten werden. Eine Kraftübertragung mittels des Sicherungselements 34 erfolgt nur für den Fall, dass Kräfte auftreten, die die Reibkräfte der reibschlüssigen Verbindung übersteigen. Hierzu kann das Sicherungselement 34 in dem Dämpfungseinrichtungsgehäuse 30 beispielsweise in einer Spielpassung aufgenommen werden. Eine derartige Überlastsicherung kann auch in Verbindung mit abweichend von den in der vorliegenden Patentanmeldung beschriebenen Dämpfungseinrichtungen 28 bzw. Dämpfungselementen 32 Verwendung finden.

Das Dämpfungselement 32 wird zumindest im Wesentlichen durch einen elastischen Körper 36 gebildet, welcher eine Mehrzahl von Hohlräumen 38 aufweist. Gemäß dem vorliegenden Ausführungsbeispiel sind diese Hohlräume 38 unterschiedlich groß und im Wesentlichen symmetrisch und gleichmäßig beabstandet bzw. durch im Wesentlichen gleich große Stege bzw. Rippen 40 getrennt angeordnet. Es ist aber auch jede andere Anordnung, die sich als günstig erweist, denkbar, beispielsweise eine unsymmetrisch Verteilung, eine Verwendung gleich großer und/oder abweichend geformter Hohlräume 38. Die Hohlräume 38 könnten auch abweichend beabstandet bzw. durch unterschiedlich breite oder geformte Rippen 40 oder unregelmäßig oder nach innen bzw. außen versetzt angeordnet sein. Die Hohlräume 38 können den Körper 36 in Längsrichtung bzw. Richtung der Längserstreckung des Führungsholms 20 vollständig durchdringen oder nur partiell, mit Zwischenstegen, globular etc. oder in jeder geeigneten Art und Weise vorgesehen sein. Allgemein gesprochen definieren die Hohlräume 34 eine innere Kontur des Körpers 36.

Der elastische Körper 36 ist gemäß dem vorliegenden Ausführungsbeispiel als ein Gummi- oder Kunststoffelement ausgebildet.

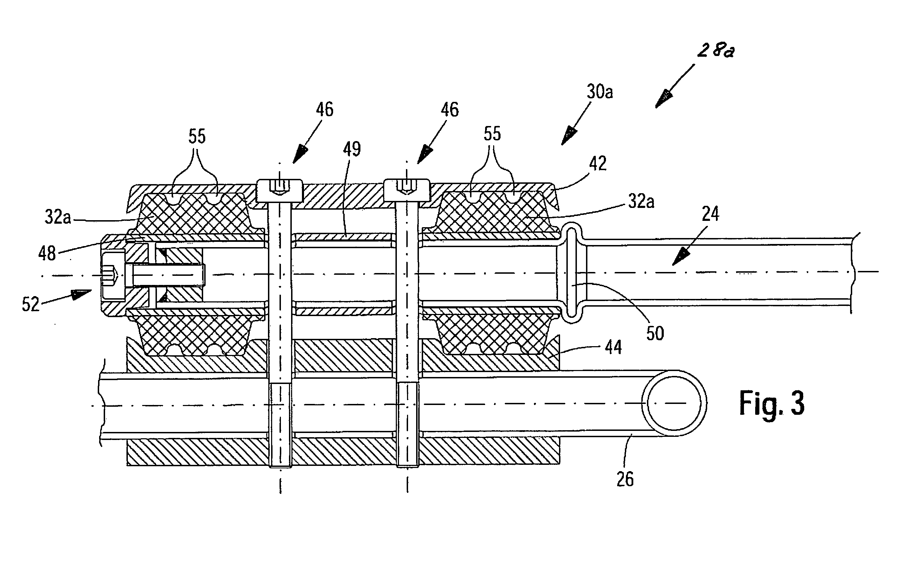

Es wird nun auf Figur 3 Bezug genommen, in der ein weiteres Ausführungsbeispiel der vorliegenden Erfindung dargestellt wird.

Figur 3 zeig eine alternative Dämpfungseinrichtung 28a mit einem Dämpfungseinrichtungsgehäuse 30a und einem alternativen Dämpfungselement 32a. Das Dämpfungseinrichtungsgehäuse 30a wird durch zwei Schalenelemente 42, 44 gebildet, wobei ein Schalenelement 44 derart ausgebildet ist, dass es geeignet ist, den unteren Holmteil 26 aufzunehmen.

Die Schalenelemente 42, 44 umschließen das Dämpfungselement 32a zumindest soweit, dass es zwischen ihnen sicher gehalten werden kann. Gemäß dem vorliegenden Ausführungsbeispiel sind zwei Sicherungsmittel 46 in der Art von Schrauben vorgesehen, welche die Dämpfungseinrichtung 28a mit Bezug auf den unteren und den oberen Holmteil 24, 26 sichern.

Es sind zwei Dämpfungselemente 32a vorgesehen, welche jeweils eine Hülse 48 und einen elastischen Körper 36a aufweisen. Die Hülse 48 ist in den elastischen Körper 36a eingepresst oder aufgeschrumpft. Das Dämpfungselements 32a kann aber auch auf die Hülse 48 aufvulkanisiert sein. Die Hülsen 48 werden auf den oberen Holmteil 24 in der Art aufgesetzt, dass zwischen ihnen ein Abstandhalter 49 in der Art einer weiteren Hülse angeordnet ist, welcher jeweils an den Hülsen 48 anliegt. Eine der Hülsen 48 liegt in montiertem Zustand an einem Anschlag 50 an dem oberen Holmteil 24 an. Weiter ist eine geeignete Schraubverbindung 52 vorgesehen, welche an der anderen Hülse 48 angreift, um die Hülsen 48 und den Abstandalter 49 an dem oberen Holmteil 24 axial zu sichern.

Die Sicherungsmittel 46 erstrecken sich durch Aussparungen 54 in dem Abstandhalter 49 und dem oberen Holmteil 24, welche derart dimensioniert sind, dass sie bezogen auf eine Bewegung des unteren Holmteils 26 gegenüber dem oberen Holmteil 24 als axialer Endanschlag dienen können, die Wirkung des Dämpfungselement 32a im normalen Betrieb aber nicht beeinflussen.

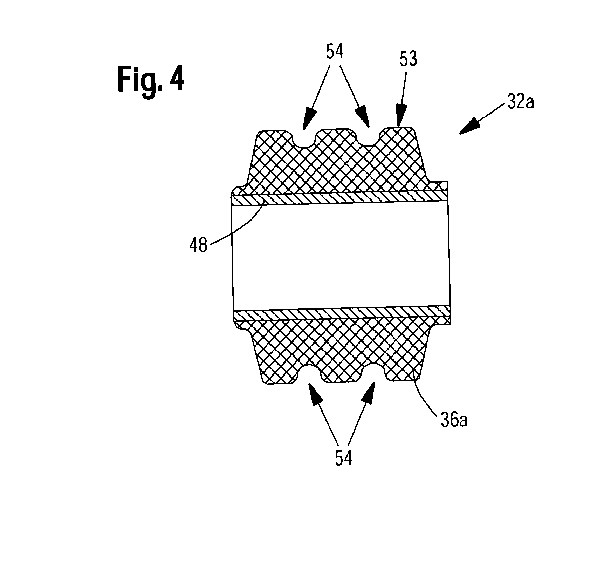

Es wird nun auch auf Figur 4 Bezug genommen, in der das Dämpfungselement 32a mit seinem elastischen Körper 36a und der in dem Körper 36a angeordneten Hülse 48 dargestellt ist.

Der Körper 36a ist im Wesentlichen in der Art eines Zylinders ausgebildet, wobei der Zylinder im Bereich seiner Außenumfangsfläche 53 mit Aussparungen 54 versehen ist, die in der Art umlaufender Rillen ausgebildet sind. Die Aussparungen definieren im Zusammenspiel mit den Schalenelementen 42 Hohlräume 55 bzw. allgemein zusammen mit der Außenumfangsfläche 53 eine äußere Kontur des Körpers 36a.

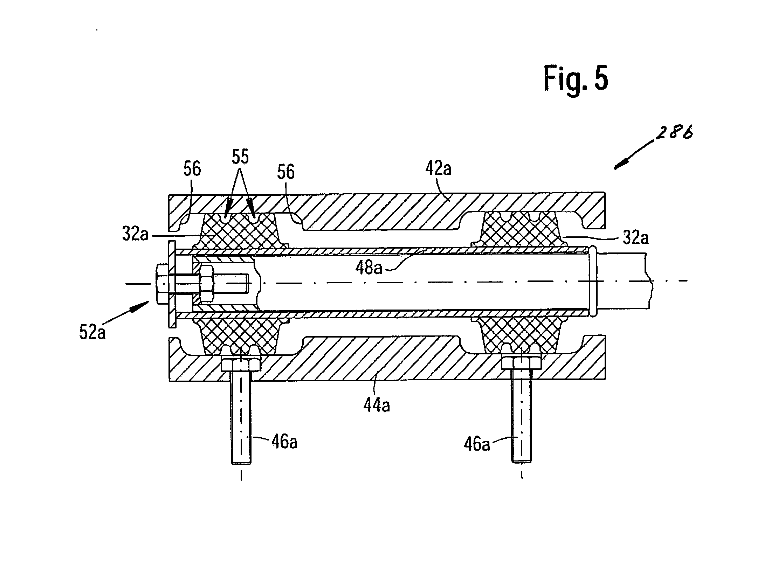

Figur 5 zeigt eine weitere Ausführungsform einer Dämpfungseinrichtung 28b, welche ähnlich der Dämpfungseinrichtung 28a des zweiten Ausführungsbeispiels ausgebildet ist. Es werden daher im Folgenden entsprechend ausgebildete Bauteile mit den gleichen Bezugszeichen benannt.

Die Dämpfungseinrichtung 28b weist zwei Dämpfungselemente 32a auf. Das Dämpfungseinrichtungsgehäuse 30a wird durch zwei Schalenelemente 42a, 44a, die im Wesentlichen denen aus Figur 3 entsprechen, gebildet. Eines der Schalenelemente 44a wird mittels Sicherungsmitteln 46a in der Art von Schrauben an dem unteren Holmteil 26 gesichert. Die beiden Schalenelemente 42a, 44a wiederum sind entweder verklemmt, durch eine weitere Schraubverbindung oder in anderer geeigneter Art und Weise miteinander verbunden, so dass sie dazu geeignete sind, die Dämpfungselemente 32a aufzunehmen. Die Schalenelemente 42a, 44a weisen Anschläge 56 auf, welche eine axiale Bewegung der Dämpfungselemente 32a mit Bezug auf die Schalenelement 42a, 44a begrenzen.

Die Dämpfungselemente 32a sind auf eine gemeinsame Hülse 48a beispielsweise aufgepresst, aufgeschrumpft oder aufvulkanisiert und werden entsprechend dem zweiten Ausführungsbeispiel mittels einer geeigneten Schraubverbindung 52a an dem oberen Holmteil 24 gesichert.

Auch der elastische Körper 36a der alternativen Ausführungsformen ist als ein Gummi- oder Kunststoffelement ausgebildet.

## Patentansprüche

1. Gerät (10) zur Rasen-, Garten- bzw. Grundstückspflege mit einem Gehäuse (12), das sich über zwei vordere und zwei rückwärtige Räder (14) auf dem Untergrund abstützt, einem an dem Gehäuse (12) über eine Dämpfungseinrichtung (28, 28a), welche ein zumindest teilweise elastisch ausgebildetes Dämpfungselement (32, 32a) aufweist, dessen Steifigkeit durch seinen wenigstens einen Hohlraum (38) und/oder eine Aussparung (54) umfassenden Querschnitt bestimmt wird, und einen Führungsholm (20) angebrachten Handgriff (20) sowie einem Antrieb (15), wobei der Führungsholm (20) einen oberen Holmteil (24) an dem der Handgriff (20) angebracht ist und einen unteren, an dem Gehäuse (12) angebrachten Holmteil (26) aufweist, und die Dämpfungseinrichtung (28) die beiden Holmteile direkt oder indirekt verbindet.

2. Gerät nach Anspruch 1, **dadurch gekennzeichnet, dass** das Dämpfungselement (32, 32a) im Wesentlichen einteilig und/oder umfangsmäßig zumindest im Wesentlichen geschlossenen ist.

3. Gerät nach Anspruch 1, **dadurch gekennzeichnet, dass** die Dämpfungseinrichtung (28a) mehrere, vorzugsweise zwei Dämpfungselemente (32a) aufweist.

4. Gerät nach einem oder mehreren der vorherigen Ansprüche, **dadurch gekennzeichnet, dass** das Dämpfungselement (30, 30a) mehrere Hohlräume (38)/Aussparungen (54) aufweist, von denen vorzugsweise wenigstens eine(r) von den Übrigen abweichend dimensioniert und/oder geformt ist.

5. Gerät nach Anspruch 4, **dadurch gekennzeichnet, dass** wenigstens zwei der Hohlräume (38)/Aussparungen (54) gleich dimensioniert und/oder geformt sind.

6. Gerät nach Anspruch 4 oder 5, **dadurch gekennzeichnet, dass** Hohlräume (38)/Aussparungen (54) gleicher Form und/oder Dimension alternierend angeordnet und/oder gruppiert sind.

7. Gerät nach einem oder mehreren der Ansprüche 4 bis 6, **dadurch gekennzeichnet, dass** die Hohlräume (38)/Aussparungen (54) beispielsweise umfangsmäßig und/oder radial beabstandet sind und/oder dass die Aussparungen (54) in der Art umlaufender Rillen bzw. Nuten ausgebildet sind.

8. Gerät nach einem oder mehreren der Ansprüche 4 bis 7, **dadurch gekennzeichnet, dass** zwischen den Hohlräumen (38)/Aussparungen (54) Rippen (40) und/oder Stege vorgesehen sind, welche vorzugsweise Bestandteil des Dämpfungselements (32) sind bzw. dieses zum Teil bilden.

9. Gerät nach Anspruch 8, **dadurch gekennzeichnet, dass** die Rippen (40) bzw. Stege gleich oder abweichend ausgebildet bzw. dimensionsioniert, insbesondere breit sind.

10. Gerät nach einem oder mehreren der vorherigen Ansprüche, **dadurch gekennzeichnet, dass** die Dämpfungseinrichtung (28) ein vorzugsweise in der Art einer Manschette ausgebildetes oder Schalenelemente (42) aufweisendes Dämpfungseinrichtungsgehäuse (30) aufweist, das daran angepasst ist, das Dämpfungselement (32) aufzunehmen.

11. Gerät nach einem oder mehreren der vorherigen Ansprüche, **dadurch gekennzeichnet, dass** das Dämpfungselement (32) und/oder das Dämpfungseinrichtungsgehäuse (30) an/mit wenigstens einem der Holmteile (24, 26) angreift bzw. zusammenwirkt.

12. Gerät nach einem oder mehreren der vorherigen Ansprüche, **dadurch gekennzeichnet, dass** das Dämpfungselement (32) eine zumindest im Wesentlichen zylindrische Kontur aufweist.

13. Gerät nach einem oder mehreren der vorherigen Ansprüche, **dadurch gekennzeichnet, dass** der Querschnitt wenigstens eine Aussparung zur direkten oder indirekten Aufnahme wenigstens eines der Holmteile (24, 26) aufweist.

14. Gerät nach einem oder mehreren der vorherige Ansprüche, **dadurch gekennzeichnet, dass** das Dämpfungselement (32) zumindest im Wesentlichen oder wenigstens bereichsweise aus einem Kunststoff- oder Gummimaterial besteht.

15. Gerät nach einem oder mehreren der vorherigen Ansprüche, **dadurch gekennzeichnet, dass** der Querschnitt insbesondere bezogen auf die Längsachse des Dämpfungselements (32) bzw. auf wenigstens einen Führungsholmteil (24, 26) symmetrisch ausgebildet ist und/oder dass der Querschnitt entlang der Längsachse bzw. entlang des Führungholmteils (24, 26) einheitlich oder abweichend ausgebildet ist.

16. Gerät nach einem oder mehreren der vorherigen Ansprüche ausgebildet in der Art eines selbstfahrenden oder handgeführten Geräts, insbesondere zur Rasen-, Garten- bzw. Grundstückspflege, beispielsweise eines Rasenmähers.

17. Gerät nach einem oder mehreren der vorherigen Ansprüche, **gekennzeichnet durch** eine Überlastsicherung, welche das Dämpfungselement (32) vor Beschädigungen schützt.

## Claims

1. Apparatus (10) for lawn, garden or grounds maintenance, having a housing (12) which is supported on the underlying surface by means of two front wheels and two rear wheels (14), having a handle (20) which is fitted to the housing (12) by means of a damping device (28, 28a), which has an at least partially elastic damping element (32, 32a), the stiffness of this damping element being determined by its cross section which comprises at least one hollow space (38) and/or one cutout (54), and a guide stem (20), and also having a drive (15), wherein the guide stem (20) has an upper stem part (24), to which the handle (20) is fitted, and a lower stem part (26), which is fitted to the housing (12), and the damping device (28) directly or indirectly connects the two stem parts.

2. Apparatus according to Claim 1, **characterized in that** the damping element (32, 32a) is substantially integral and/or is at least substantially closed around the circumference.

3. Apparatus according to Claim 1, **characterized in that** the damping device (28a) has a plurality of, preferably two, damping elements (32a).

4. Apparatus according to one or more of the preceding claims, **characterized in that** the damping element (30, 30a) has a plurality of hollow spaces (38)/cutouts (54), at least one of these hollow spaces/cutouts preferably having different dimensions and/or a different shape to the others.

5. Apparatus according to Claim 4, **characterized in that** at least two of the hollow spaces (38)/cutouts (54) have identical dimensions and/or an identical shape.

6. Apparatus according to Claim 4 or 5, **characterized in that** hollow spaces (38)/cutouts (54) of the same shape and/or dimensions are arranged in an alternating manner and/or are arranged in groups.

7. Apparatus according to one or more of Claims 4 to 6, **characterized in that** the hollow spaces (38)/cutouts (54) are spaced apart, for example, over the circumference and/or radially, and/or **in that** the cutouts (54) are designed in the manner of circumferential channels or grooves.

8. Apparatus according to one or more of Claims 4 to 7, **characterized in that** ribs (40) and/or webs are provided between the hollow spaces (38)/cutouts (54), the said ribs and/or webs preferably being constituent parts of the damping element (32) or partly forming the said damping element.

9. Apparatus according to Claim 8, **characterized in that** the ribs (40) or webs are of identical or different design or dimensions, in particular width.

10. Apparatus according to one or more of the preceding claims, **characterized in that** the damping device (28) has a damping device housing (30) which is preferably designed in the manner of a sleeve or has shell elements (42) and which is adapted to accommodate the damping element (32).

11. Apparatus according to one or more of the preceding claims, **characterized in that** the damping element (32) and/or the damping device housing (30) act on or interact with at least one of the stem parts (24, 26).

12. Apparatus according to one or more of the preceding claims, **characterized in that** the damping element (32) has an at least substantially cylindrical contour.

13. Apparatus according to one or more of the preceding claims, **characterized in that** the cross section has at least one cutout for directly or indirectly receiving at least one of the stem parts (24, 26).

14. Apparatus according to one or more of the preceding claims, **characterized in that** the damping element (32) is composed of a plastic or rubber material at least substantially or at least in regions.

15. Apparatus according to one or more of the preceding claims, **characterized in that** the cross section is of symmetrical design, in particular in relation to the longitudinal axis of the damping element (32) or to at least one guide stem part (24, 26), and/or **in that** the cross section is of uniform or different design along the longitudinal axis or along the guide stem part (24, 26).

16. Apparatus according to one or more of the preceding claims, designed in the manner of a self-propelling or manually-guided apparatus, in particular for lawn, garden or grounds maintenance, for example a lawnmower.

17. Apparatus according to one or more of the preceding claims, **characterized by** an overload protection means which protects the damping element (32) against damage.

## Revendications

1. Appareil (10) pour l'entretien du gazon, du jardin ou d'un champ, comprenant un boîtier (12) qui s'appuie sur deux roues avant et deux roues arrière (14) sur le sol, une poignée (20) montée sur le boîtier (12) par le biais d'un dispositif d'amortissement (28, 28a) qui présente un élément d'amortissement (32, 32a) réalisé au moins en partie de manière élastique, dont la rigidité est déterminée par sa section transversale comprenant au moins une cavité (38) et/ou un évidement (54) et d'un longeron de guidage (20), ainsi qu'un entraînement (15), le longeron de guidage (20) présentant une partie de longeron supérieure (24) sur laquelle est montée la poignée (20) et une partie de longeron inférieure (26) montée sur le boîtier (12), et le dispositif d'amortissement (28) reliant les deux parties de longeron directement ou indirectement.

2. Appareil selon la revendication 1, **caractérisé en ce que** l'élément d'amortissement (32, 32a) est essentiellement réalisé d'une seule pièce et/ou est au moins sensiblement fermé sur sa périphérie.

3. Appareil selon la revendication 1, **caractérisé en ce que** le dispositif d'amortissement (28a) présente plusieurs, de préférence deux, éléments d'amortissement (32a).

4. Appareil selon l'une quelconque des revendications précédentes, **caractérisé en ce que** l'élément d'amortissement (30, 30a) présente plusieurs cavités (38)/évidements (54) dont au moins de préférence un ou une est dimensionné(e) et/ou formé(e) de manière différente des autres.

5. Appareil selon la revendication 4, **caractérisé en ce qu'**au moins deux des cavités (38)/évidements (54) sont dimensionné(e)s et/ou formé(e)s de manière identique.

6. Appareil selon la revendication 4 ou 5, **caractérisé en ce que** des cavités (38)/évidements (54) de même forme et/ou de même dimension sont disposé(e)s et/ou regroupé(e)s en alternance.

7. Appareil selon l'une quelconque ou plusieurs des revendications 4 à 6, **caractérisé en ce que** les cavités (38)/évidements (54) sont espacé(e)s par exemple sur la périphérie et/ou radialement et/ou **en ce que** les évidements (54) sont réalisés à la manière de gorges ou de rainures périphériques.

8. Appareil selon l'une quelconque ou plusieurs des revendications 4 à 7, **caractérisé en ce qu'**entre les cavités (38)/évidements (54) sont prévues des crêtes (40) et/ou des nervures, qui constituent de préférence une partie de l'élément d'amortissement (32) ou qui forment celui-ci en partie.

9. Appareil selon la revendication 8, **caractérisé en ce que** les crêtes (40) ou les nervures sont réalisées ou dimensionnées de manière identique ou différente, en particulier sont larges.

10. Appareil selon l'une quelconque ou plusieurs des revendications précédentes, **caractérisé en ce que** le dispositif d'amortissement (28) présente un boîtier de dispositif d'amortissement (30) réalisé de préférence à la manière d'une manchette ou présentant des éléments formant coque (42), lequel est adapté de manière à recevoir l'élément d'amortissement (32).

11. Appareil selon l'une quelconque ou plusieurs des revendications précédentes, **caractérisé en ce que** l'élément d'amortissement (32) et/ou le boîtier de dispositif d'amortissement (30) viennent en prise contre ou coopèrent avec au moins l'une des parties de longeron (24, 26).

12. Appareil selon l'une quelconque ou plusieurs des revendications précédentes, **caractérisé en ce que** l'élément d'amortissement (32) présente un contour au moins sensiblement cylindrique.

13. Appareil selon l'une quelconque ou plusieurs des revendications précédentes, **caractérisé en ce que** la section transversale présente au moins un évidement pour recevoir directement ou indirectement au moins l'une des parties de longeron (24, 26).

14. Appareil selon l'une quelconque ou plusieurs des revendications précédentes, **caractérisé en ce que** l'élément d'amortissement (32) se compose au moins essentiellement ou au moins en partie d'un matériau en plastique ou en caoutchouc.

15. Appareil selon l'une quelconque ou plusieurs des revendications précédentes, **caractérisé en ce que** la section transversale est réalisée de manière symétrique en particulier par rapport à l'axe longitudinal de l'élément d'amortissement (32) ou à au moins une partie de longeron de guidage (24, 26) et/ou **en ce que** la section transversale est réalisée de manière unitaire ou différente le long de l'axe longitudinal ou le long de la partie de longeron de guidage (24, 26).

16. Appareil selon l'une quelconque ou plusieurs des revendications précédentes, réalisé à la manière d'un appareil à déplacement autonome ou guidé à la main, en particulier pour l'entretien du gazon, du jardin ou d'un champ, par exemple à la manière d'une tondeuse à gazon.

17. Appareil selon l'une quelconque ou plusieurs des revendications précédentes, **caractérisé par** une protection contre les surcharges, qui protège l'élément d'amortissement (32) contre les endommagements.
